Europäisches Patentamt

European Patent Office

Office européen des brevets

(19)

(11) **EP 0 648 829 B1**

(12) **EUROPEAN PATENT SPECIFICATION**

(45) Date of publication and mention
of the grant of the patent:
**19.08.1998 Bulletin 1998/34**

(51) Int Cl.⁶: **C10J 3/66**, C10J 3/16,
C03C 1/02

(21) Application number: **94116402.2**

(22) Date of filing: **18.10.1994**

(54) **Process for the gasification of organic materials**

Verfahren zur Vergasung von organischen Materien

Procédé pour la gazéification de matériaux organiques

(84) Designated Contracting States:
**DE FR**

(30) Priority: **19.11.1993 JP 290349/93**
**19.10.1993 JP 260873/93**
**19.10.1993 JP 260872/93**

(43) Date of publication of application:
**19.04.1995 Bulletin 1995/16**

(60) Divisional application: **98101566.2 / 0 844 297**
**98101573.8 / 0 844 298**

(73) Proprietor: **MITSUBISHI JUKOGYO KABUSHIKI KAISHA**
**Tokyo (JP)**

(72) Inventors:
• **Takeuchi,Yoshiyuki,**
**c/o Hiroshima Res.Dev.Cen.**
**Nishi-ku, Hiroshima-shi, Hiroshima-ken (JP)**
• **Tamura,Tadaaki, c/o Hiroshima Res.Dev.Cen.**
**Nishi-ku, Hiroshima-shi, Hiroshima-ken (JP)**
• **Sakai, Masayasu, c/o Hiroshima Res.Dev.Cen.**
**Nishi-ku, Hiroshima-shi, Hiroshima-ken (JP)**
• **Harada, Takayuki,**
**c/o Shimonoseki Shipyard & M.W.**
**6-chome, Shimonoseki-shi, Yamaguchi-ken (JP)**
• **Fujiwara, Kunihisa, Hiroshima Res.Dev.Cen.**
**Nishi-ku, Hiroshima-shi, Hiroshima-ken (JP)**
• **Hashimoto, Ritsuo, Hiroshima Res.Dev.Cen.**
**Nishi-ku, Hiroshima-shi, Hiroshima-ken (JP)**
• **Horizoe, Hirotoshi, Hiroshima Res.Dev.Cen.**
**Nishi-ku, Hiroshima-shi, Hiroshima-ken (JP)**

(74) Representative: **Behrens, Dieter, Dr.-Ing.**
**Wuesthoff & Wuesthoff**
**Patent- und Rechtsanwälte**
**Schweigerstrasse 2**
**81541 München (DE)**

(56) References cited:
**EP-A- 0 102 155        EP-A- 0 153 235**
**EP-A- 0 545 241        EP-A- 0 563 777**
**DE-A- 2 641 264        NL-A- 6 407 219**
**US-A- 3 847 664**

## Description

This invention relates to a process for burning or gasifying an organic material through partial oxidation and thereby producing an effectively utilizable gas.

Conventionally, organic materials including wood, farm products (such as sugarcane and corn), common plants (such as algae and weeds) and the like have been gasified. Moreover, techniques for the gasification of waste products consisting largely of organic materials have recently been developed for the purpose of processing industrial waste including plastics, waste paper, so-called shredder dust obtained by crushing plastics in scrapped automobiles, scrapped FRP boats composed mainly of thermoset resin, and the like.

Generally, conventional processes for the gasification of such organic materials have been carried out in a single-stage pyrolysis or combustion furnace of the moving bed or fluidized bed type using air or oxygen and steam, for the main purpose of recovering waste heat. Recently, processes for thermally decomposing plastics-containing waste in a single-stage pyrolysis furnace to recover its oil content are also being developed.

US-A-3 847 664 describes a process for removing organic binder material from glass fibers, wherein the organic binder is gasified by contacting it with a gas containing oxygen and aqueous vapour at a temperature below the incipient fusion temperature of the glass.

EP-A-0 153 235 relates to a two-steps process for gasifying an organic material, wherein in a first step the organic material is contacted with oxygen and aqueous vapour at a temperature of 700-800 °C, and in a second step the gases produced in the first reactor are converted at a temperature of 1300-1500 °C.

Each of the above-described conventional processes involves the following problems.

(1) Pyrolysis

(a) Plastics: Since a plurality of materials are mixed together, the pyrolysis temperature varies widely from about 300°C to 800°C, thus making the operation difficult. Moreover, the formation of soot due to undecomposed carbon and the deposition of coking products on the walls of the apparatus are problematic. Furthermore, since the pyrolytically produced oil has poor quality because of the inclusion of such undecomposed carbon, it can only be used as a low-quality fuel oil.

(b) Wood, farm products, common plants (e.g., algae and weeds) and the like: About 40 to 60% of residual carbon is formed. Moreover, the pyrolysis gas has a high $CO_2$ content and hence a low calorific value, it cannot be used as a fuel gas.

(c) Shredder dust: This material involves the same problems as described above in connection with plastics.

(2) Combustion with the aid of air

(a) The exhaust gas resulting from combustion is composed mainly of $N_2$ and $CO_2$ and, therefore, cannot be used as fuel because of its very low calorific value.

(b) Soot and $NO_x$ are formed as by-products. Moreover, the problem of secondary environmental pollution, for example, due to the formation of dioxin and its analogues may arise.

(c) Especially in the case of plastics, their combustion produces high temperatures exceeding about 1,200°C and hence tends to cause damage to the walls of the combustion furnace.

It is an object of the present invention to provide a process for the gasification of an organic material which can prevent the presence of residual unreacted carbon and the formation of soot by incomplete combustion during gasification of the organic material and thereby makes it possible to produce a high-quality gas or recover energy with high efficiency. This object is accomplished by the present invention.

The invention involves the following means.

(1) Air or oxygen is used as an oxidizing agent.
(2) An oxidation reaction and a water gas reaction are made to take place concurrently.
(3) The process is carried out so that the molar ratio ($H_2O/C$) of the supplied steam to the carbon in the organic material is in the range of 1 to 10.

According to the present invention which is provided with the above-described means, an organic material is processed as follows:

(1) Partial oxidation

As an oxidizing agent, air (or oxygen) has conventionally been used in an excessive amount greater than the stoichiometric amount required for combustion. In this case, when an organic material is burned (or oxidized) by reaction with oxygen in the air, oxygen provides such a high combustion rate that the surface of the organic material is first burned with the consumption of oxygen. Thereafter, oxygen is supplied to the surface of the organic material by diffusion, but the oxygen supply becomes insufficient because the diffusion rate is lower than the combustion rate. As a result, nitrogen remains on the surface of the organic material and a shortage of oxygen occurs locally. On the other hand, the surface of the organic material becomes hot as a result of the combustion caused by oxygen. However, no combustion reaction takes place because of the shortage of oxygen, and only the condensation reaction of carbonaceous materials is promoted to result in the formation of soot. If chlorine is present in the combustion gas, this soot reacts with chlorine to form harmful substances (i.e., dioxin and its analogues) as by-products.

Moreover, the shortage of oxygen also results in the formation of $NO_x$.

The above-described problems can be solved by suppressing the supply of air (or oxygen) so as to supply only the amount of oxygen required to maintain a temperature of 700 to 900°C and thereby keep the reaction temperature constant through a so-called partial oxidation reaction.

(2) An oxidation reaction and a water gas reaction are made to take place concurrently.

The oxidation reaction is an exothermic reaction, whereas the water gas reaction is an endothermic reaction. Accordingly, the reactions can be allowed to proceed gently by making both of them take place concurrently. Thus, the formation of soot and $NO_x$ due to a runaway of the oxidation reaction as described above in (1) can be prevented.

Oxidation reaction

$$C + O_2 \rightarrow CO_2 \tag{1}$$

Water gas reaction

$$C + H_2O \rightarrow CO + H_2 \tag{2}$$

(3) The molar ratio of the supplied steam to the carbon in the organic material is regulated.

The partial oxidation reaction is an exothermic reaction, whereas the water gas reaction is an endothermic reaction. Accordingly, the amount of heat absorbed increases with the amount of $H_2O$ supplied, and the temperature is lowered when the amount of heat absorbed exceeds the amount of heat generated in the oxidation reaction.

For the gasification temperature, a proper range exists for the following reasons.

(a) At 700°C or below, unreacted materials are formed as a tarry by-product.
(b) At 900°C or above, the polymerization or condensation reaction of carbonaceous materials is promoted owing to a sharp rise in temperature, and the diffusion of oxygen required for combustion is delayed, so that soot is formed as a by-product.

Thus, in order to maintain any proper gasification temperature (in the range of 700 to 900°C), there exists a proper range of the $H_2O/C$ ratio.

This proper value for $H_2O/C$ varies according to the type of the organic material. For example, organic materials having a high oxygen content (e.g., polyurethanes, biological materials and paper) require a larger amount of $H_2O$ than organic materials containing no oxygen (e.g., polyethylene and polypropylene). For organic materials (e.g., FRP) containing a large amount of ash (or inorganic components), a small amount of $H_2O$ is sufficient (see Table 1).

On the basis of equilibrium calculations, the molar $H_2O/C$ ratio is preferably in the range of 1 to 5, though it depends on the particular organic material. However, with consideration for the degree of utilization of $H_2O$ as defined by channeling or the like according to the geometry of the gasification furnace (of the fluidized bed, spouted bed, kiln or moving bed type), a molar $H_2O/C$ ratio in the range of 1 to 10 is generally used.

Where CO is produced according to the following reaction (3) instead of completely burning the carbon in the organic material to form $CO_2$, or where the amount of $O_2$ is reduced in order to suppress the combustion reaction (4)

of $H_2$ in the product gas, the amount of $H_2O$ supplied may be smaller.

$$C + 0.5O_2 \rightarrow CO \qquad (3)$$

$$H_2 + 0.5O_2 \rightarrow H_2O \qquad (4)$$

In these cases, the molar $H_2O/C$ ratio is preferably in the range of 1 to 5.

Table 1

| Element analysis of Organic materials (wt%) | | | | | |
|---|---|---|---|---|---|
| Organic material | C | H | O | N | Ash/Water |
| Polyethylene | 85.7 | 14.3 | 0.0 | 0.0 | 0.0 |
| Polypropylene | 85.8 | 14.2 | 0.0 | 0.0 | 0.0 |
| Polyurethane | 57.9 | 7.9 | 28.1 | 6.1 | 0.0 |
| FRP (*) | 50.4 | 4.4 | 7.5 | 0.0 | 37.7 |
| Kaoliang | 42.5 | 5.7 | 41.4 | 0.0 | 10.4 |
| Paper | 36.5 | 5.0 | 40.9 | 0.0 | 17.6 |

(*) An unsaturated polyester resin for use in fishing boats

The effects which can be achieved by the present invention are explained hereinbelow with reference to the following Testing Examples 1-4 and Comparative Examples 1-2.

Testing Example 1

Gasification was carried out using an apparatus having the specifications given below. In this case, no unreacted carbon was contained in the product gas.

(1) Gasification furnace

Spouted bed type
100 mm (inner diameter) x 1,500 mm (height)

(2) Operating conditions for gasification
730°C, 1 atm.
(3) Results of operation

(a) Raw material: Polyethylene = 100 g/h
(b) $H_2O/C$ = 1.3 (molar ratio)
(c) Amount of $O_2$ supplied
$O_2/C$ = 0.4 (molar ratio)
(d) Product gas

Flow rate = 378 Nl/h
Composition (vol.%): $H_2$ = 41, CO = 26, $CO_2$ = 26, $CH_4$ = 7

(e) Rate of gasification: 100%

Testing Example 2

Using the same apparatus as in Testing Example 1, gasification was carried out under the conditions given below. In this case, no unreacted carbon was contained in the product gas.

(1) Gasification furnace

Spouted bed type
100 mm (inner diameter) x 1,500 mm (height)

(2) Operating conditions for gasification
760°C, 1 atm.
(3) Results of operation

(a) Raw material: FRP (see Table 1) = 100 g/h
(b) $H_2O/C$ = 1.0 (molar ratio)
(c) Amount of $O_2$ supplied
$O_2/C$ = 0.3
(d) Product gas

Flow rate = 158 Nl/h
Composition (vol.%): $H_2$ = 41, CO = 31, $CO_2$ = 26, $CH_4$ = 2

(e) Rate of gasification: 100%

Comparative Example 1

Using the same apparatus as in Testing Example 1, gasification was carried out under the conditions given below. In this case, the temperature of the gasification furnace could not be kept above 700°C and a large amount of tar was formed as a by-product.

(1) Gasification furnace

Spouted bed type
100 mm (inner diameter) x 1,500 mm (height)

(2) Operating conditions for gasification
530°C, 1 atm.
(3) Results of operation

(a) Raw material: FRP (see Table 1) = 100 g/h
(b) $H_2O/C$ = 8.0 (molar ratio)
(c) Amount of $O_2$ supplied
$O_2/C$ = 0.3
(d) Product gas

Flow rate = 101 Nl/h
Composition (vol.%): $H_2$ = 27, CO = 28, $CO_2$ = 31, $CH_4$ = 11

(e) Rate of gasification: 64%

Testing Example 3

Using a gasification furnace of the kiln type, gasification was carried out under the conditions given below. In this case, the formation of tar as a by-product was not noted.

(1) Gasification furnace

Kiln type
200 mm (inner diameter) x 1,500 mm (height)

(2) Operating conditions for gasification
780°C, 1 atm.
(3) Results of operation

(a) Raw material: FRP (see Table 1) = 100 g/h
(b) $H_2O/C$ = 8.0 (molar ratio)
(c) Amount of $O_2$ supplied
    $O_2/C$ = 0.3
(d) Product gas

    Flow rate = 161 Nl/h
    Composition (vol.%): $H_2$ = 47, CO = 29, $CO_2$ = 23, $CH_4$ = 0.5

(e) Rate of gasification: 100%

Comparative Example 2

Using a gasification furnace of the kiln type, gasification was carried out under the conditions given below. In this case, a large amount of tar was formed as a by-product.

(1) Gasification furnace

    Kiln type
    200 mm (inner diameter) x 1,500 mm (height)

(2) Operating conditions for gasification
    560°C, 1 atm.
(3) Results of operation

    (a) Raw material: FRP (see Table 1) = 100 g/h
    (b) $H_2O/C$ = 12.0 (molar ratio)
    (c) Amount of $O_2$ supplied
        $O_2/C$ = 0.5
    (d) Product gas

    Flow rate = 90 Nl/h
    Composition (vol.%): $H_2$ = 25, CO = 27, $CO_2$ = 33, $CH_4$ = 11

    (e) Rate of gasification: 56%

Testing Example 4

Using a gasification furnace of the kiln type, gasification was carried out under the conditions given below. In this case, a high-quality gas was not produced, but neither the presence of residual unreacted carbon nor the formation of soot by incomplete combustion was noted.

(1) Gasification furnace

    Kiln type
    200 mm (inner diameter) x 1,500 mm (height)

(2) Operating conditions for gasification
    790°C, 1 atm.
(3) Results of operation

    (a) Raw material: FRP (see Table 1) = 100 g/h
    (b) $H_2O/C$ = 3.5 (molar ratio)

(c) Amount of air supplied

    Air = 291 Nl/h
    $O_2/C$ = 0.75

$O_2 = 61.2$ Nl/h

(d) Product gas

Flow rate = 387 Nl/h
Composition (vol.%): $H_2 = 0.2$, CO = 3.8, $CO_2 = 7.7$, $CH_4 = 0.0$, $O_2 = 12.8$, $N_2 = 75.7$

(e) Rate of gasification: 100%

Thus, the present invention provides a process for the gasification of an organic material which can prevent the presence of residual unreacted carbon and the formation of soot by incomplete combustion during gasification of the organic material and thereby makes it possible to obtain a high-quality gas or recover a gas permitting the recovery of much energy.

## Claims

1. A process for the gasification of an organic material through partial oxidation wherein the organic material is burned or gasified through partial oxidation in the presence of air or oxygen and of steam, characterized in that the molar ratio ($H_2O/C$) of the supplied steam to the carbon in the organic material is adjusted to a value of 1 to 10 and the process is carried out so as to supply only the amount of oxygen required to maintain a combustion or gasification temperature of 700 to 900°C.

## Patentansprüche

1. Verfahren zum Vergasen eines organischen Materials durch partielle Oxidation, wobei das organische Material durch partielle Oxidation in Gegenwart von Luft oder Sauerstoff und Dampf verbrannt oder vergast wird, durch gekennzeichnet, daß das Molverhältnis ($H_2O/C$) des zugeführten Dampfes zu dem Kohlenstoff in dem organischen Material auf einen Wert von 1 bis 10 eingestellt wird und das Verfahren so durchgeführt wird, daß nur die Menge an Sauerstoff zugeführt wird, die erforderlich ist, um eine Verbrennungs- oder Vergasungstemperatur von 700 bis 900°C aufrechtzuerhalten.

## Revendications

1. Procédé pour la gazéification de matières organiques par oxydation partielle dans lequel les matières organiques sont brûlées ou gazéifiées par oxydation partielle en présence d'air ou d'oxygène et de vapeur, caractérisé en ce que la proportion molaire de la vapeur fournie au carbone contenu dans les matières organiques ($H_2O/C$) est réglée à une valeur de 1 à 10 et en ce que le procédé est mis en oeuvre de façon à fournir seulement la quantité d'oxygène nécessaire pour maintenir une température de combustion ou de gazéification de 700 à 900 °C.